Europäisches Patentamt

European Patent Office

Office européen des brevets

(11) Veröffentlichungsnummer: **0 290 824 B1**

## (12) EUROPÄISCHE PATENTSCHRIFT

(45) Veröffentlichungstag der Patentschrift: **01.07.92**

(21) Anmeldenummer: **88106242.6**

(22) Anmeldetag: **20.04.88**

(51) Int. Cl.⁵: **F04D 13/02**, H02K 49/10, F04D 13/06

(54) **Magnetischer Pumpenantrieb.**

(30) Priorität: **09.05.87 DE 3715484**

(43) Veröffentlichungstag der Anmeldung: **17.11.88 Patentblatt 88/46**

(45) Bekanntmachung des Hinweises auf die Patenterteilung: **01.07.92 Patentblatt 92/27**

(84) Benannte Vertragsstaaten: **AT BE CH DE ES FR GB IT LI LU NL SE**

(56) Entgegenhaltungen:
CH-A- 614 760    DE-B- 1 075 435
DE-B- 2 548 798    FR-A- 1 238 221
GB-B- 742 378    US-A- 4 127 365

SOVIET INVENTIONS ILLUSTRA- TED, Sektion EI, Woche 8525, 31. Juli 1985 DERWENT PU- BLICATIONS LTD., London, X11

(73) Patentinhaber: **Franz Klaus Union Armaturen Pumpen GmbH & Co.**
**Blumenfeldstrasse 18**
**W-4630 Bochum 1(DE)**

(72) Erfinder: **Klaus, Franz**
**Dürerstrasse 12**
**W-4630 Bochum 1(DE)**

(74) Vertreter: **Patentanwälte Wenzel & Kalkoff**
**Flasskuhle 6 Postfach 2448**
**W-5810 Witten(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 290 824 B1

## Beschreibung

Die Erfindung betrifft einen magnetischen Pumpenantrieb bestehend aus einem von einem Motor angetriebenen Treiber, aus einem von dem Treiber umfaßten Läufer, mit dem das Pumpenlaufrad verbunden ist, wobei Treiber und Läufer mit sich gegenüberliegenden Permanentmagneten besetzt sind, und aus einem feststehenden Spalttopf, der den Läufer umschließt, auf seiner Innenseite mit dem Fördermedium der Pumpe in Verbindung steht, gegenüber dem Pumpengehäuse abgedichtet ist und durch den die Kraft der Permanentmagete zur Bewirkung des Antriebes vom dem Treiber auf den Läufer hindurchgeht, und dessen zylindrischer Teil zur Bildung mindestens zweier Zylinderabschnitte mit einer Stufe dazwischen versehen ist, wobei der Zylinderabschnitt mit dem jeweils kleineren Durchmesser dem Boden des Spalttopfes am nächsten ist.

Ein magnetischer Pumpenantrieb dieser Art ist aus der US-Patentschrift 4,127,365 vorbekannt. Die in dem zylindrischen Teil des Spalttopfes vorhandene Stufe ist erforderlich, um einen Ausgleich zwischen dem kleineren Durchmesser im Bereich der Kupplung und dem größeren Durchmesser im Bereich der Pumpe zu schaffen. Die Pumpe beansprucht in radialer Richtung nämlich so viel Raum, daß ein durchgehender, zylindrischer Spalttopf bei der verwendeten Kupplung nicht benutzt werden kann. Eine Spaltrohrmotorpumpe, bei der ebenfalls der Spalttopf stufig ausgebildet ist, ist aus der Deutschen Auslegeschrift 1 075 435 bekannt. Der größere Durchmesserbereich des Spalttopfes dient zur Schaffung eines Ablagerungsraumes außerhalb des Bereiches der magnetischen Kräfte. Dadurch soll sichergestellt werden, daß keine Verunreinigungen in den schmalen Spalt zwischen dem Läufer und der Innenwand des Spalttopfes gelangen, die an dieser Stelle wegen eines möglichen Durchscheuerns des Spalttopfes besonders gefährlich sind. Eine Spaltrohrmotorpumpe unterscheidet sich insofern von einem magnetischen Pumpenantrieb der gattungsgemäßen Art, als die Wickelkerne des Stators stillstehen und somit den Spalttopf auf der Außenseite berühren und damit abstützen können. Bei einem magnetischen Pumpenantrieb rotiert an dieser Stelle der Treiber, so daß keine Abstützung möglich ist.

Insbesondere bei Pumpen, die hohen Systemdrücken unterliegen, besteht die Gefahr, daß der Spalttopf in seinem zylindrischen Bereich gebläht wird, also annähernd eine Faßform einnimmt. Das gilt um so mehr, wenn ein relativ starker Antrieb erforderlich ist, so daß mehrere, aus einzelnen Permanentmagneten gebildete Ringe in Axialrichtung hintereinander angeordnet sind, um das erforderliche Drehmoment im Antriebsbereich zu übertragen. In diesem Fall ist die freie Länge zwischen dem Abdichtflansch des Spalttopfes und seinem Boden relativ groß, so daß im mittleren Bereich die stärksten Durchmesservergrößerungen auftreten.

Die Wandstärke eines Spalttopfes wird zumindest im zylindrischen Bereich nur ungern erhöht, um eine bessere Formstabilität zu erzielen, weil dadurch der Wirkungsgrad leidet. Zum einen müssen die Abstände zwischen den sich anziehenden Magneten an dem Treiber bzw. an dem Läufer vergrößert werden, zum anderen entsteht zumindest bei metallischen Spalttöpfen durch die höhere Wandstärke des Spalttopfes ein besserer Leiter, der wiederum den Anteil an Verlustwärme erhöht. In einer bisher unveröffentlichten Patentanmeldung hat dieselbe Anmelderin vorgeschlagen, den zylindrischen Bereich des Spalttopfes durch Ringe zu stützen, zwischen denen die Ringe aus Permanentmagneten angeordnet sind. Dadurch wird zwar die Formstabilität des Spalttopfes verbessert, die Montagemöglichkeiten sind jedoch außerordentlich erschwert, so daß Treiber aus zwei Hälften oder dgl. verwendet werden müssen.

Es ist Aufgabe der Erfindung, einen magnetischen Pumpenantrieb der eingangs genannten Art so zu verbessern, daß trotz der Anordnung von mindestens zwei Ringen aus Permanentmagneten und der sich daraus ergebenden Länge des Spalttopfes ein guter Wirkungsgrad beibehalten wird und bei leichter Montagemöglichkeit ein Höchstmaß an Formstabilität auch bei hohen Systemdrükken innerhalb des Spalttopfes erreicht wird.

Zur Lösung dieser Aufgabe schlägt die Erfindung vor, daß im Bereich jedes Zylinderabschnittes auf dem Treiber und dem Läufer Permanentmagnete angebracht sind.

Die Erfindung schlägt also vor, daß die Zylinderabschnitte zwischen den Stufen bzw. zwischen der Stufe in herkömmlicher Weise zur Anordnung der Magnete herangezogen werden, so daß keine zusätzlichen Verluste durch dickere Wandstärken oder größere Abstände der Permanentmagnete des Treibers zu denen des Läufers in Kauf genommen werden müssen. Vielmehr lassen sich der Treiber von der einen Seite und der Läufer von der anderen Seite über bzw. in den Spalttopf schieben, so daß herkömmliche Montageverfahren eingesetzt werden können.

Die Stufenbereiche können zusätzlich durch eine Materialansammlung verstärkt sein, was in einfachster Weise dadurch geschieht, daß der Durchmesserübergang an der Außenseite des Spalttopfes näher an dem Spalttopfboden liegt als der an der Innenseite. Dadurch entsteht ein integraler Verstärkungsring, der an dieser Stelle die Wandstärke des Spalttopfes ansteigen läßt und eine äußerst günstige Stützkraft liefert. Statt eines integralen Verstärkungsringes kann selbstverständlich ein äußerer Ring an dieser Stelle aufgeschoben sein, dessen Außendurchmesser dann dem Durchmesser des benachbarten, im Durchmesser größeren Zylinderabschnittes entspricht oder geringfügig größer ist als dieser.

Unabhängig von der Gestaltung der Stufen bewirken diese eine drastische Verkürzung der freien Zylinderabschnitte, so daß hohe Systemdrücke innerhalb des Spalttopfes gut beherrscht werden und keine starken Formänderungen in Richtung auf eine Faßform befürchtet werden müssen. Die freien Abschnitte lassen sich besonders klein wählen, so daß sehr steife Spalttöpfe entstehen, die in Verbindung mit schmalen Kränzen aus Permanentmagneten eingesetzt werden. Wirtschaftliche Permanentmagnete können bis zu einer Erstreckung von 1 cm in Axialrichtung des Spalttopfes und weniger eingesetzt werden.

Für den Treiber wie für den Läufer bilden integrale Verstärkungsringe oder eine Materialverdikkung im Bereich der freien Kante des Treibers ideale Voraussetzungen für eine "Opferreibfläche", die durch die Wahl der Abstände bei Lagerschäden mit dem Treiber bzw. dem Läufer in Berührung kommen, noch ehe die Permanentmagnete bzw. andere Bereiche auf wesentlich empfindlicheren Partien des Spalttopfes aufsetzen. Diese Eigenschaft bringt eine erhöhte Sicherheit gegen eine Beschädigung und damit gegen ein unbeabsichtigtes Austreten der Förderflüssigkeit aus dem Spalttopf mit sich. Darüber hinaus kann bei entsprechender Abfragung der Berührung eine Alarmmeldung erfolgen, so daß die gewonnene Sicherheit auch überprüfbar ist.

Es ist nicht Bedingung, daß jeder Zylinderabschnitt zwischen zwei Stufen bzw. zwischen einer Stufe und dem Boden oder dem vorderen Dichtflansch zur Übertragung von Magnetkräften herangezogen wird, sondern es können an beliebiger Stelle auch andere Einbauten vorhanden sein, beispielsweise ein Hilfslaufrad zur Umwälzung des Fördermediums durch den Kupplungsbereich. Es kommt lediglich darauf an, daß der Spalttopf eine ausreichende Steifigkeit gegen Verformung bei partieller Dünnwandigkeit aufweist.

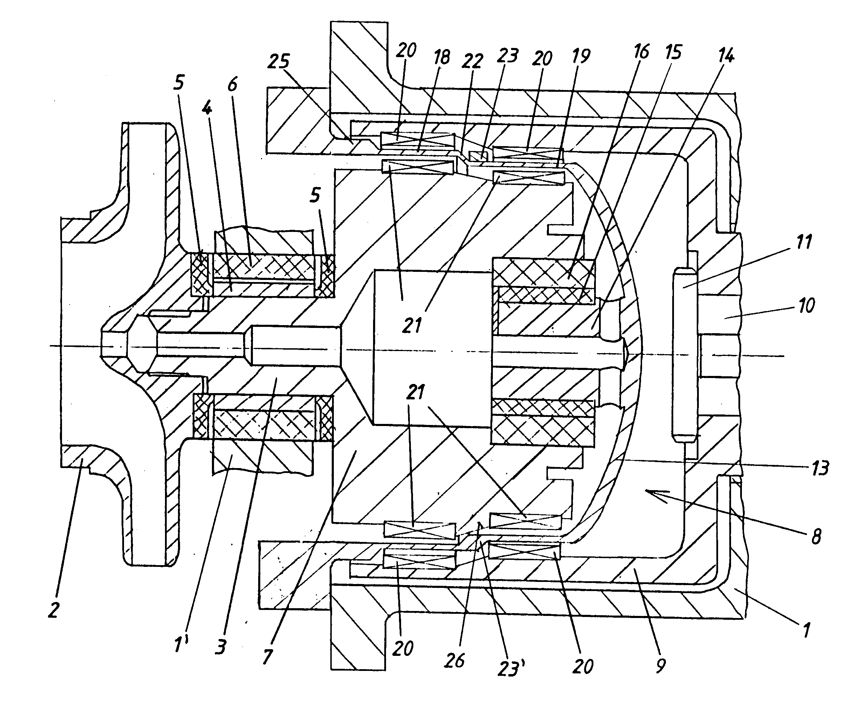

Nachfolgend wird ein Ausführungsbeispiel der Erfindung, das in der Zeichnung dargestellt ist, näher erläutert; die einzige Figur der Zeichnung zeigt:
eine schematische Querschnittsansicht durch einen magnetischen Pumpenantrieb gemäß der Erfindung, die in der oberen Hälfte eine Stufe mit einem aufgeschobenen Verstärkungsring und in der unteren Hälfte eine Stufe mit integralem Verstärkungsring wiedergibt.

Das in der einzigen Figur der Zeichnung wiedergegebene Ausführungsbeispiel zeigt ein Kupplungsgehäuse 1, an dem in der Regel das nur angedeutete Pumpengehäuse 1' mit Hilfe von Zugankern befestigt ist. Innerhalb des Pumpengehäuses 1' rotiert ein Laufrad 2, das mit Hilfe einer Welle 3 mit einem Innenläufer 7 verbunden ist. Die Welle 3 und der Innenläufer 7 bilden einen integralen Bestandteil. Die Welle 3 ist mit Hilfe einer Lagerbuchse 4 innerhalb eines Radiallagers 6 geführt, an dem wiederum seitlich Axiallagerscheiben 5 anliegen. Der Läufer 7 ist an seinem freien Ende nochmals an einem Zapfen 14 am Boden 13 eines Spalttopfes 8 geführt, und zwar mit Hilfe einer feststehenden Lagerbuchse 15, um die ein Radiallager 16 rotiert.

Innerhalb des Kupplungsgehäuses 1 ist ein Treiber 9 drehbar gelagert, der mit Hilfe einer Wellenmutter 11 auf einer nur partiell dargestellten Welle 10 gelagert ist. Der Treiber 9 hat eine glockenförmige Gestalt, und innerhalb der Höhlung befindet sich der Spalttopf 8, der wiederum glockenartig den Läufer 7 übergreift. Auf der Außenseite des Läufers 7 sowie auf der Innenseite des Treibers 9 sind Permanentmagnete 20 bzw. 21 paarweise angebracht, wobei sich, bezogen auf jeweils den Treiber 9 oder den Läufer 7, die magnetischen Polungen abwechseln. Es liegen sich also ein Südpol des Treibers 9 und ein Nordpol des Läufers 7, daneben ein Nordpol des Treibers 9 und ein Südpol des Läufers 7 gegenüber usw. Dies gilt für jeden der beiden aus Permanentmagneten 20 und 21 gebildeten Kränze. Mit Hilfe dieser Permanentmagnete 20 und 21 wird die Antriebskraft von einem Elektromotor (nicht dargestellt) über den Treiber 9 auf den Läufer 7 und damit auf das Pumpenlaufrad 2 übertragen.

Der Spalttopf 8 ist abweichend von herkömmlichen Spalttöpfen gestaltet. Im Bereich der Kränze aus Permanentmagneten 20 und 21 sind jeweils Zylinderabschnitte 18 und 19 vorhanden, die durch eine Stufe 22 verbunden sind. In der oberen Bildhälfte der Figur ist ein Ausführungsbeispiel mit einer annähernd gleichbleibenden Wandstärke im Bereich der Stufe 22 wiedergegeben. Zur Stützung an dieser Stelle ist auf den Zylinderabschnitt 19 mit dem kleineren Durchmesser ein Verstärkungsring 23 aufgeschoben, der den Spalttopf nach Art eines Faßreifens umfaßt und stützt. Der Außendurchmesser des Verstärkungsringes 23 ist so gewählt, daß er annähernd dem Durchmesser des benachbarten zylindrischen Abschnitts mit dem größeren Durchmesser entspricht. In dieser Weise kann der dem Laufrad 2 zugewandte Kranz aus Permanentmagneten 20 mühelos über den Verstärkungsring 23 bei der Montage hinübergeschoben werden.

Auf der unteren Bildhälfte ist an dieser Stelle ein integraler Verstärkungsring 23' vorhanden, der als Materialansammlung innerhalb des Spalttopfmaterials zu erkennen ist. Er hat im wesentlichen dieselbe Wirkung wie das vorangehend beschriebene Ausführungsbeispiel, lediglich in der Herstellung gibt es Unterschiede. Es ist deutlich zu erkennen, daß zu beiden Seiten der Stufe 22 übliche geometrische Bedingungen für einen Spalttopf herrschen, also bei dünner Wandstärke die Permanentmagnete 20 und 21 relativ nahe an der jeweiligen Spalttopfoberfläche entlangrotieren können.

Im Bereich der freien Kante des Treibers 9 weist der Spalttopf gemäß einer Weiterbildung der Erfindung eine Materialverdickung 25 auf, die ringartig den Spalttopf 8 umgreift. An dieser Stelle ist der Abstand zur Innenseite des Treibers 9 geringer als der Abstand zwischen den Permanentmagneten 20 und der Oberfläche des zylindrischen Abschnittes 18, so daß bei einer Beschädigung der Lagerung an der Welle 10 nicht die Permanentmagnete im Bereich der dünnwandigen zylindrischen Abschnitte 18 auf dem Spalttopf 8 aufsetzen, sondern die freie Kante des Treibers 9 auf der Materialverdickung 25, so daß zunächst die Gefahr einer ernsthaften Beschädigung des Spalttopfes 8 ausgeschaltet ist. Eine ähnliche Sicherung kann auf der Innenseite des Spalttopfes 8 vorhanden sein, was mit einer Schräge 26 in der unteren Bildhälfte in unmittelbarer Nähe zu dem integralen Verstärkungsring 23' angedeutet ist. Die Schräge 26 berührt den Spalttopf an dieser Stelle bei einer Beschädigung der Lagerung des Läufers 7, bevor die Permanentmagnete 21 die Gelegenheit zu einer Berührung der Innenfläche des Spalttopfes 8 erhalten.

Die Wahl zwischen einem integralen Verstärkungsring 23' und einem aufgesetzten Verstärkungsring 23 richtet sich nach dem Verwendungszweck. Wenn aus Korrosionsgründen relativ weiche Materialien für den Spalttopf 8 verwendet werden müssen, empfiehlt sich die Anbringung von aufgeschobenen Verstärkungsringen 23, die dann aus einem wesentlich festeren Material mit einem größeren Elastizitätsmodul gewählt werden können. Im übrigen kann über die Erstreckung in axialer Richtung und vor allen Dingen durch die Bestimmung der Höhe der Stufe 22 annähernd jede gewünschte Festigkeit erzielt werden.

Abweichend von der Darstellung können selbstverständlich noch mehr Kränze aus Permanentmagneten eingesetzt werden, wenn der Antrieb entsprechend gestaltet ist. Allerdings kann auch innerhalb eines Zylinderabschnittes des Spalttopfes 8 ein Hilfslaufrad oder dergleichen angeordnet sein, womit ein Hinweis gegeben ist, daß die Formstabilität des Spalttopfes 8 im Vordergrund steht und nicht die möglichst lückenlose Bestückung mit Permanentmagneten.

Die beiden in der Figur der Zeichnung verdeutlichten Ausführungsbeispiele sind nur beispielhaft an ein und derselben Pumpe demonstriert worden. In der Praxis wird im Bereich einer einzigen Stufe entweder ein aufgeschobener oder ein integraler Stützring verwendet. Selbstverständlich ist es möglich, bei mehreren Stufen unterschiedliche Stützringtypen zu verwenden, in der Praxis wird jedoch der eine oder der andere Typ bevorzugt.

**Patentansprüche**

1. Magnetischer Pumpenantrieb, bestehend aus einem von einem Motor angetriebenen Treiber (9), aus einem von dem Treiber (9) umfaßten Läufer (7), mit dem das Pumpenlaufrad (2) verbunden ist, wobei Treiber (9) und Läufer (7) mit sich gegenüberliegenden Permanentmagneten (20, 21) besetzt sind, und aus einem feststehenden Spalttopf (8), der den Läufer (7) umschließt, auf seiner Innenseite mit dem Fördermedium der Pumpe in Verbindung steht, gegenüber dem Pumpengehäuse (1) abgedichtet ist und durch den die Kraft der Permanentmagnete (20, 21) zur Bewirkung des Antriebes vom dem Treiber (9) auf den Läufer (7) hindurchgeht, und dessen zylindrischer Teil zur Bildung mindestens zweier Zylinderabschnitte (18, 19) mit einer Stufe (22) dazwischen versehen ist, wobei der Zylinderabschnitt (19) mit dem jeweils kleineren Durchmesser dem Boden (13) des Spalttopfes (8) am nächsten ist, dadurch **gekennzeichnet,** daß im Bereich jedes Zylinderabschnittes (18, 19) auf dem Treiber (9) und dem Läufer (7) Permanentmagnete (20, 21) angebracht sind.

2. Magnetischer Pumpenantrieb nach Anspruch 1, dadurch **gekennzeichnet** daß im Bereich der Stufe zur Bildung eines integralen Verstärkungsringes (23') der Durchmesserübergang an der Außenseite des Spalttopfes (8) näher an dem Spalttopfboden liegt als der an der Innenseite.

3. Magnetischer Pumpenantrieb nach Anspruch 1, dadurch **gekennzeichnet,** daß auf den Zylinderabschnitt (19) mit dem jeweils kleineren Durchmesser des Spalttopfes (8) ein Verstärkungsring (23) aufschiebbar ist, dessen Außendurchmesser dem des benachbarten, grösseren Zylinderabschnittes (18) entspricht oder geringfügig größer ist.

4. Magnetischer Pumpenantrieb nach Anspruch 2 oder 3, dadurch **gekennzeichnet,** daß der Abstand der Permanentmagnete (20) des Treibers (9) von der Oberfläche des Spalttopfes (8) in dem zugeordneten Zylinderabschnitt (18, 19) größer ist als der Abstand des Treibers (9) zu einem der Verstärkungsringe (23, 23').

**5.** Magnetischer Pumpenantrieb nach Anspruch 2, dadurch **gekennzeichnet,** daß der Abstand der Permanentmagnete (21) des Läufers (7) von der Innenfläche des Spalttopfes (8) in dem zugeordneten Zylinderabschnitt (18, 19) größer ist als der Abstand des Läufers (7) zu einem der Verstärkungsringe (23').

**6.** Magnetischer Pumpenantrieb nach einem der vorherigen Ansprüche, dadurch **gekennzeichnet,** daß der Spalttopf (8) im Bereich der freien Kante des Treibers (9) eine Materialverdickung (25) aufweist, und daß an dieser Stelle der Abstand des Treibers (9) von der Oberfläche des Spalttopfes (8) am geringsten ist.

**7.** Magnetischer Pumpenantrieb nach einem der vorherigen Ansprüche, dadurch **gekennzeichnet,** daß die relativen Abstände der Permanentmagnete (20, 21) an dem Treiber (9) und dem Läufer (7) zueinander und zu dem Spalttopf (8) in den jeweiligen Zylinderabschnitten (18, 19) im wesentlichen identisch sind.

## Claims

**1.** Magnetic pump drive consisting of a driver (9), driven by a motor, of a rotor (7) encircled by the driver (9) with which rotor the impeller (2) of a pump is connected, the driver (9) and the rotor (7) respectively being provided with opposing permanent magnets (20, 21), and of a stationary isolating shell (8) which encircles the rotor (7), is in contact on its inside with the medium of the pump, is sealed against the housing (1) of the pump and through which the force of the permanent magnets (20, 21) passes for effecting the drive from the driver (9) over to the rotor (7) and whose cylindrical section is provided with a step (22) for forming at least two cylindrical sections (18, 19) whereby the cylindrical section (19) having the smaller diameter is closest to the bottom (13) of the isolating shell (8), **characterized** in that in the area of each cylindrical section (18, 19) permanent magnets (20, 21) are provided on the driver (9) and on the rotor (7).

**2.** Magnetic pump drive according to claim 1, **characterized** in that in the area of the step the diameter transition on the outside of the isolating shell (8) is closer to the isolating shell bottom than that on the inside for forming an integral reinforcing ring (23').

**3.** Magnetic pump drive according to claim 1, **characterized** in that a reinforcing ring (3) can be slipped onto the cylindrical section (19),

having the smaller diameter of the isolating shell (8) the outer diameter of which corresponds to the adjacent, bigger cylindrical section (18) or is slightly bigger.

**4.** Magnetic pump drive according to claim 2 or 3, **characterized** in that the distance of the permanent magnets (20) of the driver (9) from the surface of the isolating shell (8) in the respective cylindrical section (18, 19) is bigger than the distance of the driver (9) to one of the reinforcing rings (23, 23').

**5.** Magnetic pump drive according to claim 2, **characterized** in that the distance of the permanent magnets (21) of the rotor (7) from the internal surface of the isolating shell (8) in the respective cylindrical section (18, 19) is bigger than the distance of the rotor (7) to one of the reinforcing rings (23').

**6.** Magnetic pump drive according to one of the proceeding claims, **characterized** in that the isolating shell (8) has a material accumulation (25) in the area of the free edge of the driver (9) and that at this place the distance of the driver (9) from the surface of the isolating shell (8) is a minimum.

**7.** Magnetic pump drive according to one of the proceeding claims, **characterized** in that the relative distances of the permanent magnets (20, 21) on the driver (9) and the rotor (7) respectively to each other and to the isolating shell (8) in each cylindrical section (18, 19) are substantially identical.

## Revendications

**1.** Dispositif d'entraînement magnétique de pompe, constitué par un dispositif d'actionnement (9) entraîné par un moteur, par un rotor (7) entouré par le dispositif d'actionnement (9) et auquel est raccordé le rotor (2) de la pompe, le dispositif d'actionnement (9) et le rotor (7) étant pourvus d'aimants permanents opposés (20,21), et par un pot fendu fixe (8), qui entoure le rotor (7), est en contact, au niveau de sa face intérieure, avec le milieu d'entraînement de la pompe et est étanchéifié par rapport au carter (1) de la pompe et par lequel la force des aimants permanents (20,21) est transmise du dispositif d'actionnement (9) au rotor (7), pour réaliser l'entraînement, et dont la partie cylindrique est équipée, pour la formation d'au moins deux sections cylindriques (18,19), d'une partie étagée (22) située entre ces sections, la section cylindrique (19) possédant le diamètre le plus petit étant la plus proche du fond (13) du pot fendu (8), caractérisé en ce que des aimants permanents (20,21) sont installés, au voisinage de chaque section cylindrique (18,19), sur le dispositif d'actionnement (9) et sur le rotor (7).

2. Dispositif d'entraînement magnétique de pompe selon la revendication 1, caractérisé en ce qu'au voisinage de la partie étagée, pour la formation d'une bague intégrale de renforcement (23'), la jonction périphérique à la face extérieure du pont fendu (8) est plus proche du fond de ce pot que ne l'est la jonction périphérique avec la face intérieure.

3. Dispositif d'entraînement magnétique de pompe selon la revendication 1, caractérisé en ce que sur la section cylindrique (19) possédant le diamètre le plus petit du pot fendu (8) est emmanchée une bague de renforcement (23), dont le diamètre extérieur correspond ou est légèrement inférieur à celui de la section cylindrique voisine plus grande (18).

4. Dispositif d'entraînement magnétique de pompe selon la revendication 2 ou 3, caractérisé en ce que la distance entre les aimants permanents (20) du dispositif d'actionnement (9) et la surface du pot fendu (8) dans la section cylindrique associée (18,19) est supérieure à la distance entre le dispositif d'actionnement (9) et l'une des bagues de renforcement (23,23').

5. Dispositif d'entraînement magnétique de pompe selon la revendication 2, caractérisé en ce que la distance entre les aimants permanents (21) du rotor (7) de la surface intérieure du pot fendu (8) dans la section cylindrique associée (18,19) est supérieure à la distance entre le rotor (7) et l'une des bagues de renforcement (23').

6. Dispositif d'entraînement magnétique de pompe selon l'une des revendications précédentes, caractérisé en ce que le pot fendu (8) possède, au niveau du bord libre du dispositif d'actionnement (9), une partie épaissie (25), et qu'en cet endroit, la distance entre le dispositif d'actionnement (9) et la surface du pot fendu (8) est minimale.

7. Dispositif d'entraînement magnétique de pompe selon l'une des revendications précédentes, caractérisé en ce que les distances relatives des aimants permanents (20,21) situés sur le dispositif d'entraînement (9) et sur le rotor (7) entre eux et par rapport au pot fendu (8) dans les sections cylindriques respectives (18,19) sont sensiblement identiques.